# EUROPÄISCHE PATENTSCHRIFT

(11) **EP 1 508 464 B1**
(45) Veröffentlichungstag und Bekanntmachung des Hinweises auf die Patenterteilung: **21.05.2008**
(21) Anmeldenummer: 03102596.8
(22) Anmeldetag: 19.08.2003
(51) Int. Cl.: B60J 5/04, B60J 7/10, B60J 7/11

(54) **Verfahren zur Steuerung eines Dachflügels**
Method for controlling a roof wing door
Procédé de réglage d'un panneau pivotant de toit

(43) Veröffentlichungstag der Anmeldung: 23.02.2005
(73) Patentinhaber: Ford Global Technologies, LLC, A subsidary of Ford Motor Company, Dearborn, MI 48126 (US)
(72) Erfinder: Matheis, Anton, 51467 Bergisch Gladbach (DE); Benderoth, Thomas, 51545 Waldbroel (DE); Spahl, Robert, 51109 Koeln (DE)
(74) Vertreter: Drömer, Hans-Carsten

(56) Entgegenhaltungen:
- US-A- 2 973 221
- PATENT ABSTRACTS OF JAPAN vol. 011, no. 302 (M-629), 2. Oktober 1987 (1987-10-02) -& JP 62 094417 A (NIPPON DENSO CO LTD;OTHERS: 01), 30. April 1987 (1987-04-30)
- PATENT ABSTRACTS OF JAPAN vol. 011, no. 302 (M-629), 2. Oktober 1987 (1987-10-02) -& JP 62 094418 A (NIPPON DENSO CO LTD;OTHERS: 01), 30. April 1987 (1987-04-30)

## Beschreibung

Die Erfindung betrifft ein Verfahren zur Steuerung eines über einer Seitentür eines Kraftfahrzeugs angeordneten Dachflügels.

Ein Kraftfahrzeug mit einer Seitentür und einem darüber angeordneten Dachflügel ist beispielsweise aus der US 2,857,198 bekannt. Das dort offenbarte Fahrzeug weist über einer Fahrertür und einer Beifahrertür jeweils einen Dachflügel auf. Die Dachflügel sind um eine sich in Längsrichtung des Fahrzeugs erstreckende Schwenkachse bewegbar angeordnet. Somit lässt sich ein Dachflügel von einer geschlossenen Stellung, bei der der Dachflügel in der Ebene des Kraftfahrzeugdachs liegt, in eine geöffnete Stellung hochklappen.

In Längsrichtung des Fahrzeugs erstreckt sich der Dachflügel im wesentlichen von einer A-Säule bis zu einer B-Säule. In geschlossener Stellung bildet ein der Schwenkachse abgewandter Rand des Dachflügels und ein oberes Ende der darunter befindlichen Seitentür eine gemeinsame Kante. Werden Seitentür und Dachflügel jeweils geöffnet, ergibt sich für den Fahrer bzw. für den Beifahrer ein bequemer Ei n-stieg. Der offene Einstiegsbereich erstreckt sich dabei von einer unteren Türschwelle des Fahrzeugs bis zur Schwenkachse des Dachflügels, der im mittleren Bereich des Kraftfahrzeugdachs angeordnet ist. Insbesondere bei sportlich ausgeführten Fahrzeugen mit einer flachen Linienführung lässt sich der Einstieg (und ebenso der Ausstieg) gegenüber Fahrzeugen ohne derartige Dachflügel erheblich bequemer gestalten.

Bei dem in der US 2,857,198 offenbarten Fahrzeug wird der Dachflügel immer dann durch einen Antrieb geöffnet, wenn die Seitentür geöffnet wird bzw. sich in einer geöffneten Stellung befindet. Dies stellt zwar, wie oben beschrieben, einen bequemen Einstieg bzw. Ausstieg sicher, weist aber den Nachteil auf, dass Regen beim Öffnen der Seitentür von oben durch den geöffneten Dachflügel in den Wagen eintreten kann. Aber auch aus anderen Gründen kann ein zwangsläufiges Öffnen der Dachfl ügel unerwünscht sein. Beispielsweise könnte bei einer Tiefgarage die Gefahr bestehen, dass die Deckenhöhe der Tiefgarage für ein Öffnen der Dachflügel nicht hoch genug ist. In diesem Fall könnte das Fahrzeug nicht in der Tiefgarage abgestellt werden.

Aus der JP 62 094417 ist ein Verfahren zur Steuerung eines über einer Seitentür angeordneten Dachflügels bekannt, bei dem eine Steuereinheit drei Signale erhält und darauf basierend eine Entscheidung trifft, den Dachflügel automatisch zu Öffnen. Die Signale werden erzeugt durch einem manuell betätigten Schalter zum Türöffnen, einem Schalter am Türgriff, und einem Schalter, der die Öffnungs- bzw. Schließbewegung der Türe erkennt. Zwar kann damit das Öffnen des Türflügels durch den manuell betätigten Schalter vom Fahrer bestimmt werden. Das Verfahren weist jedoch ebenfalls die bereits oben genannten Nachteile der US 2,857,198 auf, bei Regen das Eindringen von Nässe in den Fahrgastraum oder nicht ausreichender Höhe über dem Fahrzeug eine Beschädigung des Dachflügels automatisch zu vermeiden.

Der Erfindung liegt daher die Aufgabe zugrunde, ein Verfahren bereitzustellen, durch das die oben beschriebenen Nachteile im Zusammenhang mit einem zwangsläufigen Öffnen der Dachflügel vermieden werden können.

Die Aufgabe wird durch ein Verfahren mit den Merkmalen des Anspruchs 1 gelöst. Bei dem erfindungsgemäßen Verfahren wird ein Signal D zur Ansteuerung eines Antriebs erzeugt, mit dessen Hilfe der Dachflügel geöffnet wird. Das Signal D wird erzeugt, wenn wenigstens drei Signale A, B, C vorliegen.

Durch das Signal A wird die Information übermittelt, dass eine Seitentür eines Kraftfahrzeugs geöffnet werden soll. Dieses Signal kann beispielsweise durch eine Tü r-schloss-Fernsteuerung, durch Drehen eines Schlüssels im Türschloss der Seitentür, durch Betätigung eines im Fahrzeuginneren angeordneten Türhandgriffs oder durch schlüssellose Türöffnungssysteme erzeugt werden.

Signal B enthält die Information, dass mit dem Öffnen der Seitentür der Dachflügel geöffnet werden soll. Signal B kann durch den Fahrer des Kraftfahrzeugs erzeugt werden, indem er beispielsweise einen dafür vorgesehenen Knopf auf der Türschloss-Fernsteuerung drückt. Alternativ kann das Verfahren vorsehen, dass, um bei dem Beispiel der Türschloss-Fernsteuerung zu bleiben, durch Drücken eines Knopfes verhindert werden soll, dass sich der Dachflügel öffnet. In diesem Falle würde das Signal B standardmäßig vorliegen, jedoch durch den Knopfdruck, den Dachflügel nicht zu öffnen, unterdrückt beziehungsweise nicht mehr empfangen werden können.

Das Signal B kann auch automatisch erzeugt werden.

Das Signal C wird erzeugt, wenn die Seitentür geöffnet wird oder wenn die Seitentür in einem bestimmten Maße geöffnet worden ist. Beispielsweise kann ein bestimmter Öffnungswinkel der Seitentür Voraussetzung für die Erzeugung des Signals C sein.

Vorzugsweise werden die Signale A, B, C von einer Steuervorrichtung empfangen, die das Signal D zum Öffnen des Dachflügels erzeugt. Die Steuervorrichtung kann Prozessoren oder Verarbeitungseinheiten umfassen, so wie sie im großen Umfang bei heutigen Kraftfahrzeugen eingesetzt werden.

In einem bevorzugten Ausführungsbeispiel erzeugt die Steuervorrichtung nach Empfang des Signals A ein Signal E zur Ansteuerung einer Regensensorvorrichtung. Diese Vorrichtung umfasst einen Regensensor, durch den ermittelt werden kann, ob sich das Kraftfahrzeug im Regen befindet. Nach der Überprüfung erzeugt die Regensensorvorrichtung ein Signal F, das von der Steuervorrichtung empfangen wird. Vorzugsweise wird das Signal F von der Regensensorvorrichtung, gegebenenfalls in verarbeiteter Form, als Signal B verwendet. Falls es nicht regnet, wird das dazu entsprechende Signal F derart in Signal B umgewandelt, dass der Dachflügel mit dem Öffnen der Seitentür geöffnet werden soll. Besagt hingegen das Signal F, dass es momentan regnet, wird Signal F in der Weise zu Signal B verarbeitet, dass der Dachflügel nicht geöffnet werden soll.

Das Verfahren kann auch vorsehen, dass das Signal B von dem Fahrer des Fahrzeugs erzeugt wird, obwohl das vom Regensensor erzeugte Signal F anzeigt, dass der Wagen im Regen steht. Hier kann beispielsweise, um wieder das Beispiel mit der Türschlossfernsteuerung zu verwenden, der Fahrer durch nochmaliges Drücken des dafür vorgesehenen Druckknopfes das Signal B erzeugen, so dass der Dachflügel trotz Regens geöffnet wird.

Vorzugsweise erzeugt die Regensensorvorrichtung das Signal F erst, wenn ein Scheibenwischer des Kraftfahrzeugs betätigt worden ist. Bekannte Regensensoren sind unter einer Windschutzscheibe des Kraftfahrzeugs angeordnet und erfassen Regentropfen, die sich auf der Windschutzscheibe befinden. Um sicherzustellen, dass die durch den Regensensor erfassten Regentropfen nicht von einem bereits abgeklungenen Regen stammen, wird vor Erzeugung des Signals F der Scheibenwischer des Kraftfahrzeugs betätigt, so dass nur die Regentropfen erfasst werden können, die augenblicklich auf die Windschutzscheibe fallen. Somit bleibt bei Regen der Dachflügel geschlossen. Der Dachflügel wird aber geöffnet, wenn sich Regentropfen von einem bereits abgeklungenen Regen auf der Windschutzscheibe befinden.

In einem bevorzugten Ausführungsbeispiel erzeugt die Steuereinheit nach Empfang des Signals A ein Signal G zur Ansteuerung eines Fensterhebers. Durch dieses Signal G soll der Fensterheber betätigt werden, so dass die Scheibe der Seitentür heruntergefahren wird. Diese Ausführungsform ist bei Fahrzeugen zweckmäßig, bei denen die Scheibe der Seitentür im geschlossenen Zustand mit ihrer oberen Kante in eine Dichtung an der Dachkante greift, wobei zumindest zum Teil die Dachkante durch einen äußeren Rand des Dachflügels gebildet wird. Durch die Ansteuerung des Fensterhebers wird die Scheibe herunterbewegt, so dass sie nicht mehr in die Dichtung der Dachkante greift. Somit kann die Seitentür geöffnet werden, ohne dass die Dichtung beim Öffnen der Seitentür beschädigt wird.

Die Steuervorrichtung kann ein Signal H von einer Positionserfassung der Scheibe der Seitentür empfangen, ob die Scheibe um ein bestimmtes Maß heruntergefahren ist. Die Steuervorrichtung ist dabei so ausgelegt, dass erst nach Empfang des Signals H ein Signal I zur Entriegelung der Seitentür erzeugt wird. Dies stellt sicher, dass die Seitentür nur geöffnet werden kann, wenn zuvor die Scheibe um ein vorbestimmtes Maß heruntergefahren ist.

Vorzugsweise erzeugt die Steuervorrichtung nach Empfang des Signals H ein Signal J zur Entriegelung des Dachflügels. Somit ist ausgeschlossen, dass der Dachflügel geöffnet wird, obwohl die Scheibe der Seitentür noch nicht heruntergefahren ist.

In einem bevorzugten Ausführungsbeispiel ist der Dachflügel schwenkbar an dem Dach des Kraftfahrzeugs befestigt und wird durch den Antrieb, der durch das Signal D angesteuert bzw. in Betätigung versetzt wird, innerhalb von vorzugsweise 2 Sekunden um ca. 70° geschwenkt. Damit wird der Dachflügel genügend schnell betätigt, so dass der Fahrer bzw. der Beifahrer ohne nennenswerte Verzögerung ein- beziehungsweise aussteigen kann.

Bei einer weiteren bevorzugten Ausführung des Verfahrens erzeugt ein Abstandsensor, der den Bereich über dem Dach des Kraftfahrzeuges überwacht, ein Signal, wenn die zum Öffnen des Dachflügels erforderliche Höhe über dem Kraftfahrzeug nicht zur Verfügung steht. Dies kann der Fall sein, wenn sich das Kraftfahrzeug in einer Garage, einem Tunnel, einer Fähre oder sonstigen überdachten Bereichen befindet, oder unter einer Schranke, unter Verkehrsschildern ö. ä. Gegenständen. Dann darf sich der Dachflügel nicht automatisch öffnen, um eine Beschädigung desselben zu vermeiden. Das Signal des Abstandssensors dient dann der Abschaltung der automatischen Öffnung des Dachflügels, bzw. in einer weiteren bevorzugten Ausführung wird der Dachflügel (3) entsprechend der über dem Dach zur Verfügung stehenden Höhe nur teilweise geöffnet.

Anhand eines in der Zeichnung dargestellten Ausführungsbeispiels wird die Erfindung näher beschrieben. Es zeigen:
- Fig. 1: ein Kraftfahrzeug mit zwei Dachflügeln; und
- Fig. 2: einen Ablaufplan eines Ausführungsbeispiels des erfindungsgemäßen Verfahrens.

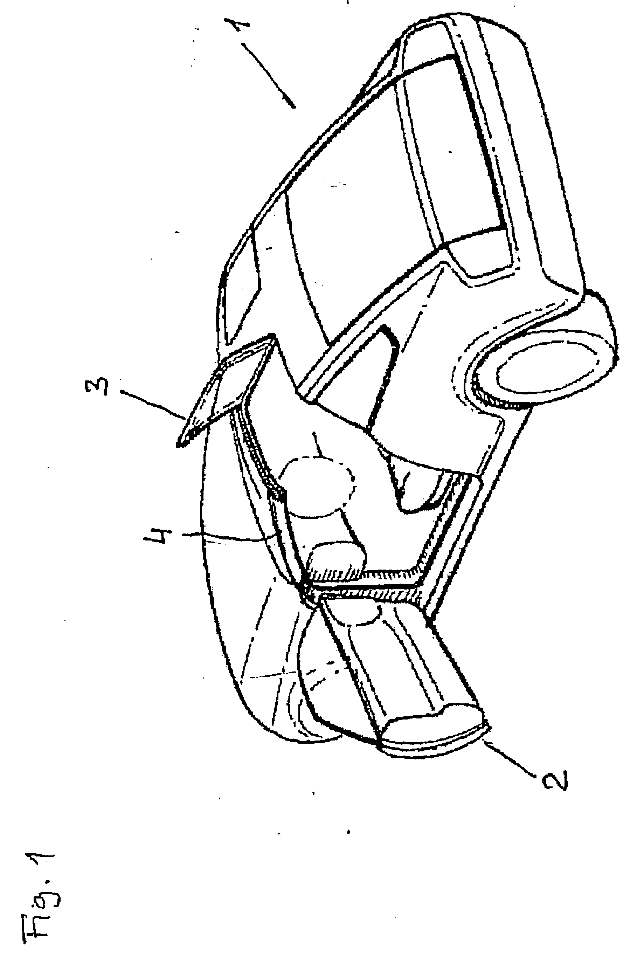

Fig. 1 zeigt ein Kraftfahrzeug 1 mit einer geöffneten Seitentür 2 und einem geöffneten Dachflügel 3. Man erkennt, dass bei geöffneter Seitentür 2 und geöffnetem Dachflügel 3 ein besonders bequemer Einstieg bzw. Ausstieg möglich ist, da der Fahrer keine Sorge haben muss, dass sein Kopf sich an einer Dachkante stoßen könnte, die sich bei geschlossenem Dachflügel 3 von einer A-Säule 4 zum Fahrzeugheck erstreckt.

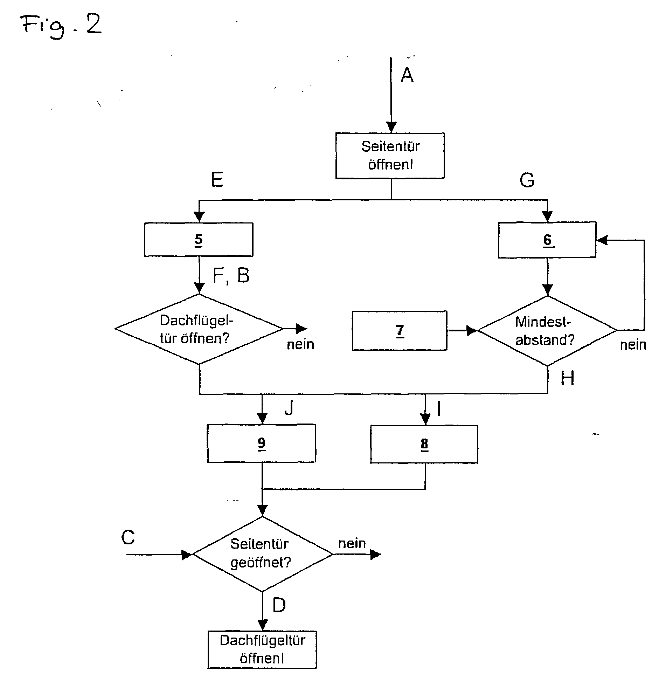

Bei geöffnetem Dachflügel 3 kann von oben Regen in das Kraftfahrzeug 1 eintreten. Um dies zu verhindern, sieht ein Ausführungsbeispiel der Erfindung vor, eine Rege n-sensorvorrichtung zu verwenden. Ein Ablaufplan für dieses Ausführungsbeispiel ist in Figur 2 dargestellt.

Ein Signal A zeigt an, dass die Seitentür 2 des Kraftfahrzeugs 1 geöffnet werden soll. Beispielsweise kann der Fahrer das Signal A durch Drücken ei nes dafür vorgesehenen Druckknopf auf einer Türschloss-Fernsteuerung erzeugen. Dem Ablaufplan ist zu entnehmen, dass daraufhin zwei Signale erzeugt werden:

Zum einen wird ein Signal E erzeugt, durch das eine Regensensorvorrichtung 5 angesteuert wird. Durch die Regensensorvorrichtung 5 wird erfasst, ob das Kraftfahrzeug 1 sich im Regen befindet. Nach Überprüfung durch die Regensensorvorrichtung 5 wird ein Signal F erzeugt. Bei dem Verfahren gemäß Figur 2 wird das Signal F als einzige Einflussgröße für ein Signal B verwendet, durch das festgelegt wird, ob der Dachflügel 3 geöffnet wird oder nicht. Basierend auf Signal A wird Signal B damit automatisch erzeugt.

Zum anderen wird ein Signal G erzeugt, durch das ein Fensterheber 6 angesteuert wird. Durch den Fensterheber 6 wird eine Seitenscheibe der Seitentür 2 heruntergefahren. Somit wird verhindert, dass beim Öffnen der Seitentür die Seitenscheibe, die in hochgefahrener Stellung in eine Dichtung an einer Dachkante des Kraftfahrzeugs 1 greift, nicht an dieser Dichtung hängen bleibt. Das Verfahren gemäß Figur 2 sieht vor, dass die Position der Seitenscheibe durch einen Sensor 7 (Fensterhebersensor 7) ermittelt wird. Ist ein bestimmter Mindestabstand zwischen Seitenscheibe und Dichtung an der Dachkante erreicht, beispielsweise 10 mm, wird ein Signal H erzeugt. Der Fensterhebersensor 7 kann alternativ auch andere Größen erfassen, anhand derer sich eine Aussage treffen lässt, dass die Seitenscheibe genügend weit heruntergefahren ist. Beispielsweise kann auch ein Drehwinkel eines rotierenden Teil eines Antriebs des Fensterhebers 6 erfasst werden.

Liegt das Signal H vor, werden die Signale I und J erzeugt. Das Signal I wird einer Entriegelungsvorrichtung 8 für die Seitentür 2 zugeleitet, so dass die Seitentür 2 entriegelt wird und nun geöffnet werden kann. Das Signal J wird einer Entriegelungsvorrichtung 9 für den Dachflügel 3 zugeleitet. Somit kann auch der Dachflügel 3 geöffnet werden.

Wenn der Fahrer die nun entriegelte Seitentür öffnet, wird ein Signal C erzeugt. Nun liegen die Signale A, B und C vor, so dass ein Signal D erzeugt wird, das zur Ansteuerung eines Antriebs 10 zur Öffnung des Dachflügels 3 dient. Der Antrieb öffnet daraufhin den Dachflügel 3, so dass der Fahrer, vergleiche Figur 1, aufgrund der großen Seitenöffnung bequem in den Wagen einsteigen kann.

Nach Schließen der Seitentür 2 kehrt die Seitenscheibe wieder in ihren ursprünglichen Zustand zurück. Dies ist im Ablaufplan der Figur 2 jedoch nicht dargestellt.

## Patentansprüche

1. Verfahren zur Steuerung eines über einer Seitentür (2) eines Kraftfahrzeugs (1) angeordneten Dachflügels (3), mit folgenden Schritten:
a) Empfang eines Signals A, dass die Seitentür (2) des Kraftfahrzeugs (1) geöffnet werden soll;
b) Empfang eines Signals B, dass mit dem Öffnen der Seitentür (2) der Dachflügel (3) geöffnet werden soll;
c) Empfang eines Signals C, das erzeugt wird, wenn die Seitentür (2) geöffnet wird oder wenn die Seitentür (2) in einem bestimmten Maße geöffnet worden ist; und
d) Erzeugen eines Signals D zur Ansteuerung eines Antriebs (10), mit dessen Hilfe der Dachflügel (3) geöffnet wird, bei Vorliegen wenigstens der Signale A, B und C,
**dadurch gekennzeichnet, dass**
die Öffnung des Dachflügels (3) von mindestens einem der folgenden weiteren Signale beeinflusst wird:
e) nach Empfang des Signals A wird ein Signal E zur Ansteuerung einer Regensensorvorrichtung (5) erzeugt;
f) nach Empfang des Signals A wird ein Signal G zur Ansteuerung eines Fensterhebers (6) erzeugt;
g) ein Abstandsensor, der den Bereich über dem Dach des Kraftfahrzeuges (1) überwacht, erzeugt ein Signal, wenn die zum Öffnen des Dachflügels (3) erforderliche Höhe über dem Kraftfahrzeug (1) nicht zur Verfügung steht.

2. Verfahren nach Anspruch 1,
**dadurch gekennzeichnet, dass**
eine Steuervorrichtung die Signale A, B, C empfängt und das Signal D erzeugt.

3. Verfahren nach Anspruch 1 oder 2,
**dadurch gekennzeichnet, dass**
nach Empfang des Signals A ein Signal E zur Ansteuerung einer Regensensorvorrichtung (5) erzeugt wird, wobei ein Signal F von einer Regensensorvorrichtung (5) empfangen wird.

4. Verfahren nach Anspruch 3,
**dadurch gekennzeichnet, dass**
das Signal F von der Regensensorvorrichtung (5), gegebenenfalls in verarbeiteter Form, als Signal B verwendet wird.

5. Verfahren nach Anspruch 3 oder 4,
**dadurch gekennzeichnet, dass**
die Regensensorvorrichtung (5) das Signal F erst erzeugt, wenn ein Scheibenwischer des Kraftfahrzeugs (1) betätigt worden ist.

6. Verfahren nach einem der Ansprüche 1 bis 5,
**dadurch gekennzeichnet, dass**
ein Signal G zur Ansteuerung eines Fensterhebers (6) erzeugt wird, wobei ein Signal H von einem Sensor (7) zur Erfassung der Position einer Seitenscheibe empfangen wird, ob die Seitenscheibe um ein bestimmtes Maß heruntergefahren ist, und dass erst bei Empfang des Signals H ein Signal I zur Entriegelung der Seitentür (2) erzeugt wird.

7. Verfahren nach Anspruch 6,
**dadurch gekennzeichnet, dass**
bei Empfang des Signals H ein Signal J zur Entriegelung des Dachflügels (3) erzeugt wird.

8. Verfahren nach einem der Ansprüche 1 bis 7,
**dadurch gekennzeichnet, dass**
der Dachflügel (3) schwenkbar befestigt ist und durch den Antrieb innerhalb von 2 Sekunden um 70 Grad geschwenkt wird.

9. Verfahren nach einem der Ansprüche 1 bis 8,
**dadurch gekennzeichnet, dass**
nach Schließen der Seitentür (2) die Seitenscheibe in die Position bewegt wird, in der sie sich vor Öffnen der Seitentür befunden hat.

10. Verfahren nach einem der vorherigen Ansprüche,
**dadurch gekennzeichnet, dass**
ein Abstandsensor, der den Bereich über dem Dach des Kraftfahrzeuges (1) überwacht, ein Signal erzeugt, wenn die zum Öffnen des Dachflügels (3) erforderliche Höhe über dem Kraftfahrzeug (1) nicht zur Verfügung steht, wobei der Dachflügel (3) entsprechend der über dem Dach zur Verfügung stehenden Höhe nur teilweise geöffnet wird.

## Claims

1. Method for controlling a roof wing door (3) which is arranged above a side door (2) of a motor vehicle (1), having the following steps:
a) reception of a signal A indicating that the side door (2) of the motor vehicle (1) is to be opened;
b) reception of a signal B indicating that the roof wing door (3) is to be opened with the opening of the side door (2);
c) reception of a signal C which is generated if the side door (2) is opened or if the side door (2) has been opened to a certain degree; and
d) generation of a signal D for actuating a drive (10) with the aid of which the roof wing door (3) is opened, when at least the signals A, B and C are present,
**characterized in that**
the opening of the roof wing door (3) is influenced by at least one of the following further signals:
e) after reception of the signal A, a signal E for actuating a rain sensor device (5) is generated;
f) after reception of the signal A, a signal G for actuating a window lifter (6) is generated;
g) a distance sensor which monitors the area above the roof of the motor vehicle (1) generates a signal if the height above the motor vehicle (1) which is necessary for the roof wing door (3) to open is not available.

2. Method according to Claim 1, **characterized in that** a control device receives the signals A, B, C and generates the signal D.

3. Method according to Claim 1 or 2, **characterized in that** after the reception of the signal A, a signal E for actuating a rain sensor device (5) is generated, wherein a signal F is received by a rain sensor device (5).

4. Method according to Claim 3, **characterized in that** the signal F from the rain sensor device (5) is used as signal B, if appropriate in a processed form.

5. Method according to Claim 3 or 4, **characterized in that** the rain sensor device (5) does not generate the signal F until a windscreen wiper of the motor vehicle (1) has been activated.

6. Method according to one of Claims 1 to 5, **characterized in that** a signal G for actuating a window lifter (6) is generated, wherein a signal H is received by a sensor (7) for sensing the position of a side window to determine whether the side window is lowered to a certain degree, and **in that** a signal I for unlocking the side door (2) is not generated until the signal H is received.

7. Method according to Claim 6, **characterized in that** when the signal H is received, a signal J for unlocking the roof wing door (3) is generated.

8. Method according to one of Claims 1 to 7, **characterized in that** the roof wing door (3) is pivotably mounted and is pivoted by the drive through 70 degrees within 2 seconds.

9. Method according to one of Claims 1 to 8, **characterized in that** after the closing of the side door (2), the side window is moved into the position in which it was located before the side door opened.

10. Method according to one of the preceding claims, **characterized in that** a distance sensor which monitors the area above the roof of the motor vehicle (1) generates a signal if the height above the motor vehicle (1) which is necessary for the roof wing door (3) to open is not available, wherein the roof wing door (3) is only partially opened as a function of the height which is available above the roof.

## Revendications

1. Procédé pour commander un panneau de toit (3) disposé par-dessus une porte latérale (2) d'un véhicule automobile (1), comprenant les étapes suivantes :
a) réception d'un signal A, indiquant que la porte latérale (2) du véhicule automobile (1) doit être ouverte ;
b) réception d'un signal B, indiquant que le panneau de toit (3) doit être ouvert en même temps que l'ouverture de la porte latérale (2) ;
c) réception d'un signal C, produit lorsque la porte latérale (2) est ouverte ou lorsque la porte latérale (2) a été ouverte dans une mesure déterminée ; et
d) production d'un signal D pour commander un entraînement (10) à l'aide duquel le panneau de toit (3) est ouvert, en présence d'au moins les signaux A, B et C,
**caractérisé en ce que**
l'ouverture du panneau de toit (3) est influencée par au moins l'un des signaux supplémentaires suivants :
e) à la réception du signal A, un signal E est émis pour commander un dispositif de détection de pluie (5) ;
f) à la réception du signal A, un signal G est émis pour commander un lève-glace (6) ;
g) un détecteur de distance, qui contrôle la plage au-dessus du toit du véhicule automobile (1), produit un signal lorsque la hauteur nécessaire au-dessus du véhicule automobile (1) pour l'ouverture du panneau de toit (3) n'est pas disponible.

2. Procédé selon la revendication 1,
**caractérisé en ce**
**qu'**un dispositif de commande reçoit les signaux A, B, C et produit le signal D.

3. Procédé selon la revendication 1 ou 2,
**caractérisé en ce**
**qu'**après la réception du signal A, un signal E est émis pour commander un dispositif de détection de pluie (5), un signal F étant reçu d'un dispositif de détection de pluie (5).

4. Procédé selon la revendication 3,
**caractérisé en ce que**
le signal F est utilisé par le dispositif de détection de pluie (5), éventuellement sous forme traitée, en tant que signal B.

5. Procédé selon la revendication 3 ou 4,
**caractérisé en ce que**
le dispositif de détection de pluie (5) produit le signal F seulement lorsqu'un essuie-glace du véhicule automobile (1) a été actionné.

6. Procédé selon l'une quelconque des revendications 1 à 5,
**caractérisé en ce**
**qu'**un signal G est émis pour la commande d'un lève-glace (6), un signal H étant reçu par un capteur (7) pour détecter la position d'une vitre latérale, indiquant si la vitre latérale est abaissée d'une mesure déterminée, et en ce qu'un signal I est émis pour déverrouiller la porte latérale (2) uniquement à la réception du signal H.

7. Procédé selon la revendication 6,
**caractérisé en ce**
**qu'**à la réception du signal H, un signal J est émis pour déverrouiller le panneau de toit (3).

8. Procédé selon l'une quelconque des revendications 1 à 7,
**caractérisé en ce que**
le panneau de toit (3) est fixé de manière pivotante et est pivoté de 70 degrés par l'entraînement en l'espace de 2 secondes.

9. Procédé selon l'une quelconque des revendications 1 à 8,
**caractérisé en ce**
**qu'**après la fermeture de la porte latérale (2), la vitre latérale est déplacée dans la position dans laquelle elle se trouvait avant l'ouverture de la porte latérale.

10. Procédé selon l'une quelconque des revendications précédentes,
**caractérisé en ce**
**qu'**un détecteur de distance qui contrôle la plage au-dessus du toit du véhicule automobile (1), produit un signal lorsque la hauteur nécessaire au-dessus du véhicule automobile (1) pour l'ouverture du panneau de toit (3) n'est pas disponible, le panneau de toit (3) ne s'ouvrant alors que partiellement en fonction de la hauteur disponible au-dessus du toit.
